# EUROPEAN PATENT APPLICATION

(11) **EP 1 340 724 A1**
(43) Date of publication of application: **03.09.2003**
(21) Application number: 01997466.6
(22) Date of filing: 22.11.2001
(51) Int. Cl.: C03B 37/018, G02B 6/00

(54) **METHOD AND DEVICE FOR MANUFACTURING GLASS PARTICULATE SEDIMENTED BODY**

(30) Priority: 24.11.2000 JP 2000357101
(71) Applicant: Sumitomo Electric Industries, Ltd., Osaka-shi, Osaka 541-0041 (JP)
(72) Inventor: OOISHI, Toshihiro, Yokohama-shi, Kanagawa 244-0844 (JP); NAKAMURA, Motonori, Yokohama-shi, Kanagawa 244-0844 (JP); YOKOYAMA, Yoshio, Yokohama-shi, Kanagawa 244-0844 (JP)
(74) Representative: HOFFMANN - EITLE
(86) International application number: JP0110225
(87) International publication number: WO02042231

(57) **Abstract**

In a method in which a rotating starting rod and glass particle synthesizing burners are relatively reciprocally moved in parallel with each other, so that while a turn-back position of the relative movement is shifted in a predetermined direction, glass particles (soot) are deposited on a surface of the starting rod to thereby produce a glass particles deposit, the deposition of soot is performed under a condition that an interval between a burner located at any one of both ends in a direction of the relative movement and a burner located adjacent thereto is shorter than another interval between any two of intermediate burners other than the two burners located at the both ends.

## Description

### Technical Field

The present invention relates to a method of producing a glass particles deposit (porous glass preform) and an apparatus used for the method, in which while a starting rod and glass particle synthesizing burners are moved relatively, glass particles are deposited on the starting rod in a radial direction of the starting rod. Particularly, the present invention relates to a method of producing a glass particles deposit, and an apparatus used for the method in which the glass particles deposit having smaller taper portions formed at both ends can be obtained.

### Background Technique

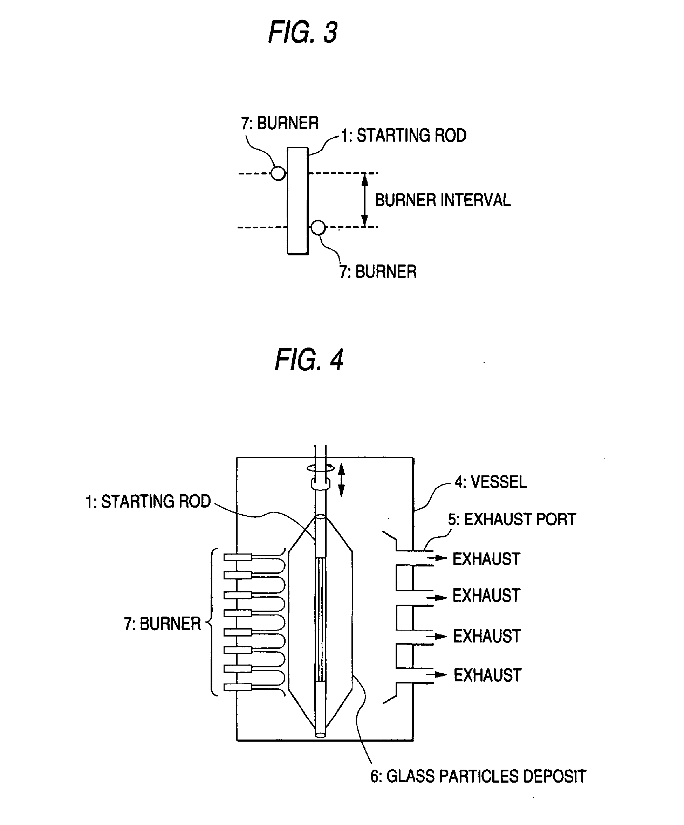

As a method of producing a large-sized optical fiber preform at a high rate deposition, as shown in Fig. 4, there is a method (multi-layer soot deposition) in which a plurality of glass particle synthesizing burners 7 are arranged at predetermined intervals so as to be opposite to a starting rod 1 in a vessel 4, and the rotating starting rod 1 and the line of burners 7 are moved relatively (hereinafter referred to as "traverse") (in the drawing, an example in which the starting rod 1 is vertically reciprocally moved is shown ) so that glass particles (soot) are deposited into layers on a surface of the starting rod 1 to thereby obtain a glass particles deposit (soot body) 6.

In such a method for depositing glass particles (soot deposition method), a distance for the relative movement (the traverse distance) between the starting rod and each burner is set to be substantially a burner interval in order to enhance efficiency of deposition of glass particles. However, there is a problem that fluctuation in the outer diameter of the glass particles deposit (soot body) is generated in a longitudinal direction of the glass particles deposit. Such fluctuation in the outer diameter of the glass particles deposit is caused by the following fact. That is, at a turn-back position of the relative movement between the starting rod and each burner (turn-back position of traverse, or traverse end portion), there necessarily occurs an instant that this relative movement stops, so that the substantial time for depositing glass particles at the turn-back position is elongated than that in a normal portion where the relative movement is performed at a steady rate, or so that the degree of touching of the flame of the burner against the glass particles deposit at the turn-back position is different from that in the normal portion. Particularly in the case where the distance for the relative movement is constant, the turn-back position always comes to the same position of the starting rod so that fluctuation in the outer diameter due to the above-mentioned reason is promoted. Once a starting point of the outer diameter fluctuation is generated, glass particles are deposited more and more on a portion in which the surface area has become large, so that the outer diameter fluctuation becomes larger and larger acceleratively.

In order to obtain an optical fiber preform of good quality, it is important to reduce fluctuation of the outer diameter of the glass particles deposit as sufficiently as possible, and there are various proposals for such methods. For example, there has been proposed a method in which the traverse end portion requiring a substantially longer time for soot deposition, or fluctuation of the degree of touching of the flame of the burner against the glass particles deposit is dispersed all over the glass particles deposit by shifting a traverse starting position each traverse, shifting the traverse starting position in an reverse direction after the traverse starting position has been shifted to a predetermined position, and returning the traverse starting position to the initial traverse starting position, so that the deposition amount of glass particles can be uniform in the longitudinal direction to thereby reduce the outer diameter fluctuation (Japanese Patent Laid-open No. Hei. 3-228845).

Further, as a method for reducing the outer diameter fluctuation, there has been also proposed a method which is based on the method disclosed in Japanese Patent Laid-open No. Hei. 3-228845 and in which outer diameter fluctuation in the whole of a glass particles deposit is measured by use of a CCD camera capable of monitoring the whole area of the glass particles deposit and a central information processing unit, so that an assistant burner which can independently traverse the whole area of the glass particles deposit is used to compensate deposition of glass particles in the portion where a deposition amount of glass particles is small to thereby reduce the outer diameter fluctuation (Japanese Patent Laid-open No. Hei. 10-158025).

Further, there is another method in which when glass particles are deposited while a traverse starting position is shifted, clean air is supplied perpendicularly to the whole of a glass particles deposit in the longitudinal direction, so that a temperature gradient in longitudinal deposition on the glass particles deposit is reduced (Japanese Patent Laid-open No. Hei. 4-260618).

The background art is characterized in that going movement and returning movement in reciprocating movement are made different in distance in order to disperse the turn-back position of traverse all over the glass particles deposit. A fact that outer diameter fluctuation is apt to be generated from the turn-back position of traverse has been noticed, so that the background art is aimed at equalizing deposition conditions for glass particles by longitudinally dispersing the turn-back position. According to the result of additional test by the present inventors, presence of the effect of reduction in outer diameter fluctuation has been confirmed.

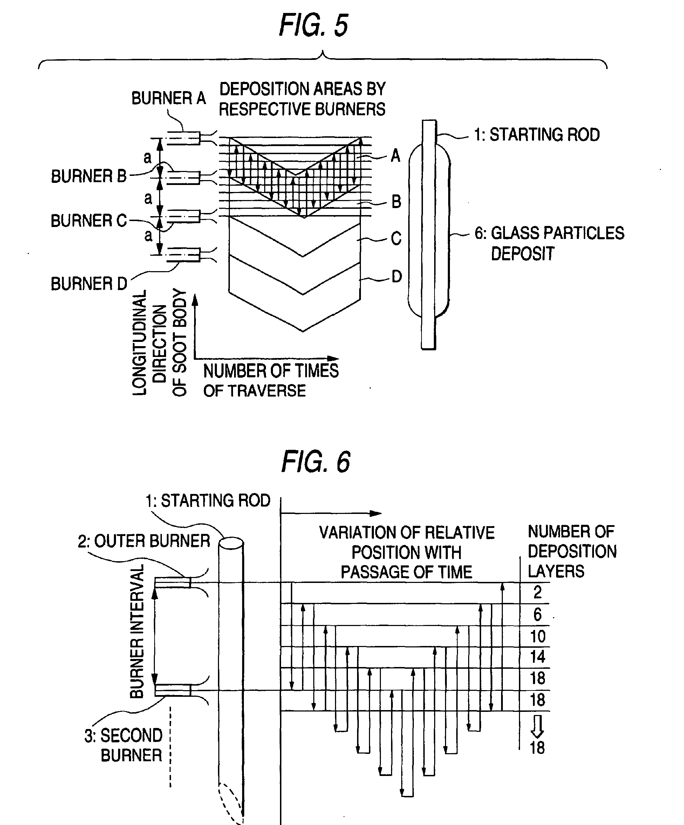

However, in the above-mentioned method of shifting the turn-back position of traverse, deposition shapes of glass particles deposited by the burners located at both ends in the direction of movement are tapered respectively (the number of deposition layers is reduced as it goes to each end portion), as shown in Figs. 5 and 6 which will be described later and which shows an example of the relative position between the starting rod and the burners and the number of the deposition layers (these examples provide a smallest tapered portion by this method).

The situation in which the relative position between the starting rod and each burner varies with passage of time is shown as Figs . 5 and 6. Fig. 6 is an explanation drawing showing an enlarged main portion. In Fig. 6, the portion of an outermost burner 2 and a second burner 3 next to the outermost burner 2 in the burner line is shown (the same situation will be applied to the outer burner and the burner next to the outer burner on the both side), and each numerical value on the right side shows a number of deposition layers of glass particles formed on the starting rod 1 while a series of reciprocating movement is being carried out until the turn-back position is returned to the initial position. Because the portion below the portion having 18 layers in Fig. 6 is made by the third burner and thereafter, the number of deposition layers from the portion is 18 except the lower end portion.

In principle, in Fig. 5, the burners are equidistantly separated and an interval between any two burners is equal to a. Glass particles formed by burners A to D are deposited on shaft feather-like areas A to Drespectively. Incidentally, themovement of the upper-end burner A in the area A is shown by arrows. Here, the interval between the burner A located at one end and the intermediate burner B adjacent to the burner A, the interval between the burner D located at the other end and the intermediate burner C adjacent to the burner D, and the interval between the burners C and D are equal to a. The number of deposition layers only in the portion where glass particles are deposited by the burner at the end is reduced so that the glass particles are deposited in the end portion in the form of a tapered shape. Accordingly, glass particles generated by the burner adjacent to the burner at the end have a tendency to flow into the outer side so that most of the portion where the glass particles are deposited by the burner located as the second one from the end is formed into a tapered shape to thereby result in increase of an noneffective portion.

As one of the methods to solve the problem, it is conceived to narrow the interval between the burners while increasing the number of burners correspondingly. In such a manner, the interval between the outer burner and the burner next to the outer burner where glass particles are deposited is narrowed so that the tapered portion can be reduced. However, when the interval between the burners is narrowed, increase in the number of burners is necessary for production of a glass particles deposit having an effective portion with the same length. Therefore, gas feed systems are increased, and equipment cost is increased.

### Disclosure of the Invention

In order to solve the above-mentioned problem, an object of the present invention is to provide a method and an apparatus of depositing glass particles so as to reduce a tapered portion which is formed at an end portion of a glass particles deposit.

In the method of producing a glass particles deposit according to the present invention, a plurality of glass particle synthesizing burners are arranged opposite to a rotating starting rod, and the starting rod and the glass particle synthesizing burners are relatively reciprocally moved in parallel with each other. A turn-back position of the relative and reciprocating movement is shifted along a predetermined direction by approximate 1/n (n being an integer) of a burner interval each time, and the turn-back position is shifted in an reverse direction when the turn-back position has been shifted by a distance corresponding to the burner interval. In such a manner, the movement is repeated sequentially so that glass particles synthesized by the burners are made to be deposited successively on a surface of the starting rod to thereby produce the glass particles deposit. On this occasion, the deposition of the glass particles is performed under a condition that an interval between a burner located at any one of both ends in the direction of the relative movement and a burner located adjacent thereto is set to be shorter than another interval between any two of intermediate burners other than the two burners located at the both ends.

Desirably, a length over which the turn-back position of traverse is shifted is in a range of from 5 mm to 60 mm.

Further, a feed rate of glass raw material to the burner located at any one of the both ends is lower than a feed rate of glass raw material to each of the intermediate burners.

Desirably, the interval between the burner located at any one of the both ends and the burner located adjacent thereto is set so that flames of the end burner and the adjacent burner do not interfere with each other.

Desirably, the burner located at any one of the both ends is a burner having flame spread less than each of the intermediate burners.

In the apparatus according to the present invention, a plurality of glass particle synthesizing burners are arranged opposite to a rotating starting rod so that the starting rod and the glass particle synthesizing burners are relatively reciprocally moved in parallel with each other; and glass particles synthesized by the burners are deposited successively on a surface of the starting rod to thereby produce a glass particles deposit. The apparatus is characterized in that an interval between a burner located at any one of both ends in a direction of the relative movement and the burner located adjacent thereto is arranged to be shorter than another interval between any two of intermediate burners other than the two burners located at the both ends.

Desirably, the interval between the burner located at any one of the both ends and the burner located adjacent thereto is in a range that the interval is smaller than 1 time but not smaller than 0.2 time of the interval between any two of the intermediate burners other than the two burners located at the both ends.

Desirably, the interval between the burner located at any one of the both ends and the burner located adjacent thereto is set to be optionally adjustable in a range that the interval is smaller than 1 time but not smaller than 0.2 time of the interval between any two of the intermediate burners other than the two burners located at the both ends.

Desirably, the burner located at any one of the both ends is a burner having less flame spread than each of the intermediate burners.

In the present invention, the interval between the burner (outer burners) located at any one of the both ends in the direction of relative movement and the burner located adjacent thereto is set to be smaller than the interval between any two of the intermediate burners. In a boundary portion between the deposition layers of glass particles made by each outer burner and the deposition layers of glass particles made by the burner adjacent to the outer burner, there is formed a portion in which the number of deposition layers per one way (one traverse) of reciprocating movement is substantially made twice. In such a manner, the insufficient amount of glass particles is compensated so that formation of a tapered portion can be reduced.

### Brief Description of the Drawings

Fig. 1 is a drawing schematically showing a situation of areas where glass particles are deposited by burners respectively in the method according to the present invention;
Fig. 2 is explanation drawings of arrangement examples viewed from a direction of movement of burners;
Fig. 3 is a drawing showing a state of an interval between burners viewed from a direction perpendicular to the direction of movement, in the case where the burners are not arranged in one line;
Fig. 4 is an explanation drawing showing an outline of production of a glass particles deposit in a method of depositing glass particles into multi-layers;
Fig. 5 is a drawing schematically showing a situation of areas where glass particles are deposited by burners respectively in a conventional method; and
Fig. 6 is an explanation drawing showing an example of the situation of relative movement between a starting rod and burners in the conventional method.

### Best Mode for Carrying Out the Invention

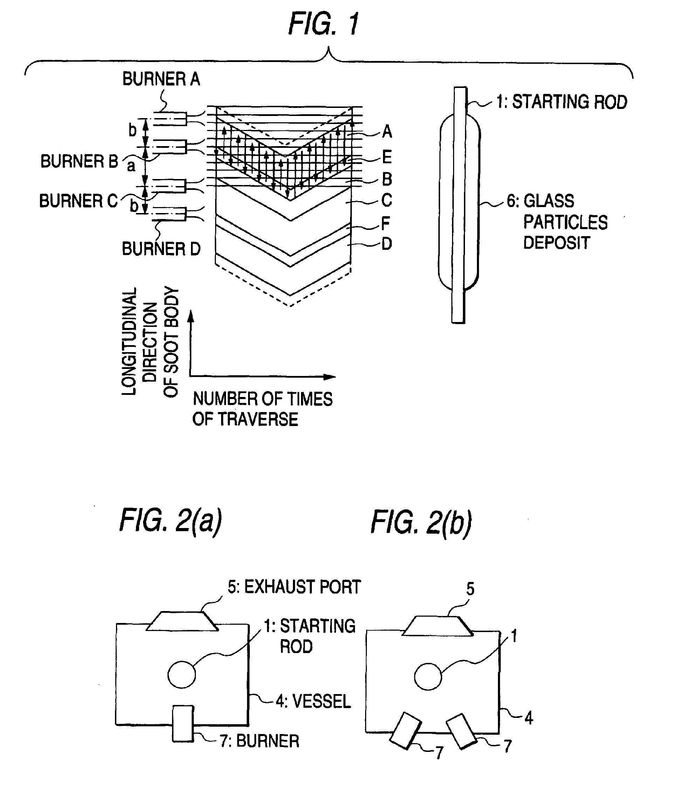

Fig. 1 schematically shows an example of a situation of relative movement between a starting rod and burners, and areas where glass particles are deposited by respective burners according to a method of producing a glass particles deposit of the present invention. In the example, four burners, that is, burner A to D, are arranged in one line opposite to a starting rod 1, and are relatively reciprocally moved with in a burner interval vertically, so that a glass particles deposit 6 is produced. In comparison with the convention technique as a reference in which burners are arranged at equal intervals as shown in Figs. 5 and 6, the technique shown in Fig. 1 is characterized in that an interval between each of two burners at both ends and a burner (intermediate burner) adjacent to it is made smaller than an interval between any two of intermediate burners.

Although the burners were conventionally equidistantly separated and intervals between the burners were equal to a as shown in Figs. 5 and 6, the intervals as shown in Fig. 1 are characterized in that each of an interval between a burner A at one end and an intermediate burner B adjacent thereto and an interval between a burner D at the other end and an intermediate burner C adjacent thereto has been selected to be an interval b smaller than the interval a between the intermediate burners B and C (a>b) (a shifting distance for relative movement is set to a as it is) .

As shown in Fig. 1, overlap areas E and F are generated respectively in a boundary portion between deposition areas A and B and in a boundary portion between deposition areas C and D. Glass particles formed by the burners A to D are deposited respectively on the shaft feather-like areas A to D.

Movement of the upper-end burner A within the area A is shown by arrows. Here, each of the overlap areas E and F becomes twice in number of deposition layers, so that it is possible to compensate the reduced amount of deposition which is caused because glass particles generated by the intermediate burners B and C flow into the sides of the burners A and D at the both ends. As a result, the tapered portions become short. Incidentally, the area shown by a dotted line in Fig. 1 is a portion corresponding to an area of deposition in the case for the conventional example (Fig. 5) .

In the method according to the present invention, a turn-back position of traverse is shifted along a predetermined direction by approximate 1/n (n being an integer) of the burner interval each time, and the turn-back position is shifted in an reverse direction when the turn-back position has been shifted by a distance corresponding to the burner interval. This movement is repeated successively. Here, approximate 1/n (n being an integer) of the burner interval means 1/n (n being an integer) of "the burner interval ± thickness of a burner".

The length corresponding to approximate 1/n (n being an integer) of the burner interval is desirably set to be in a range of from 5 mm to 60 mm, more desirably in a range of from 5 mm to 40 mm. When the shifting distance of the turn-back position of the burner is smaller than 5 mm, outer diameter fluctuation is generated before a dispersion effect of the turn-back position appears. On the other hand, when the shifting distance is larger than 60 mm, the dispersion effect of the turn-back position becomes small.

The interval between the outer burner and the burner adjacent thereto may be set suitably in accordance with characteristic of the burners, conditions of deposition of glass particles, etc., as far as causing no interference between the flames of the burners, and overlapping between the deposition layers of glass particles made by the outer burner and the burner adjacent thereto is not too great. If interference of adjacent flames of the adjacent burners is generated, efficiency of deposition of glass particles will be reduced or fluctuation in the outer diameter will be generated. In order to prevent such flame interference, it is preferable that the interval between burners is made to be not smaller than 100 mm.

In the normal case, it is preferable that the interval is made to be smaller than 1 time but not smaller than 0.2 time of the interval of any two of the intermediate burners. Adjustment of the interval between burners may be made by use of an apparatus in which burners have been set at predetermined intervals in advance. Alternatively, it is convenient to use an apparatus in which burners can be moved and set at any desirable positions.

As to arrangement of the burners, burners 7 may be arranged in one line in parallel with a starting rod 1 as shown in Fig. 2(a) in Fig. 2 showing an arrangement drawing viewed from top. Alternatively, the burners 7 may be arranged in a plurality of lines as shown in Fig. 2(b).

From the point of view of efficiency of exhaust, arrangement in one line as shown in Fig. 2(a) is desirable. If arrangement is made as shown in Fig. 2(b), interference with the flame of the adjacent burner is not generated even if the burner interval is smaller than that in the case for arrangement in one line. Accordingly, the arrangement made as shown in Fig. 2(b) is preferable from the point of view to improve the rate of deposition of glass particles, because the interval between the burners can be shortened and a large number of burners can be therefore used for one starting rod having the same length. Here, the burner interval in the case where burners are not arranged in one line means an interval between burners in the direction of movement as shown in Fig. 3.

The basic thought in the method according to the present invention is to increase the number of deposition layers in the portion where the amount of deposition of glass particles is reduced, so as to adjust the amount of deposition. There may be however a case where adjustment in the number of deposition layers is difficult to be achieved by adjustment of the burner interval due to the characteristic of the burners or the like. In such a case, the feed rate of glass raw material to each outer burner can be made smaller than the feed rate of glass raw material to each intermediate burner so that the amount of deposition of glass particles can be finely adjusted.

Further, in the case where each of the overlap areas of deposition layers (E and F in Fig. 1) is to be elongated without reducing the number of burners, burners having different design and small flame spread are used as the outer burners . All the burners maybe used as the burners having small flame spread, burners having good efficiency of deposition, however, are desirably used as the intermediate burners while the burners having small flame spread are used for only the outer burners, because the burners having small flame spread are poor in efficiency of deposition of glass particles.

Although the method according to the present invention will be described below specifically by use of examples, the present invention is not limited thereto.

### (Example 1)

An apparatus provided with eight burners in total located opposite to a starting rod was used. In the eight burners in one line, an interval between each of two outer burners at both ends and a burner adjacent thereto was set to 150 mm, and six burners in the intermediate position were arranged at intervals of 200 mm. Glass particles were deposited in a system in which the starting rod was vertically reciprocally moved. At this time, the starting rod was formed into a structure in which glass rods for grasping were connected to both ends of a glass rod for a core portion. The starting rod having a diameter of 35 mm was used and the method of traverse was selected to be the pattern shown in Fig. 1. At the same time, setting was made such that a shifting distant of the burners every traverse was made equal and a turn-back position of the relative movement was shifted by 20 mm each time. In such settings, glass particles were deposited. When the number of times of reciprocation reached 800, deposition of the glass particles was stopped. A glass particles deposit (porous glass preform) obtained thus had a total length of 1,600 mm, an outer diameter of 240 mm, a length of an effective portion of 1,200 mm, and a length of a tapered portion of 200 mm formed at each of the both ends.

The total length of the glass particles deposit here was a length obtained by subtracting the portions where glass particles were deposited on the glass rod for grasping (50mm at each of the both ends) from a length of the actually deposited glass particles. (Comparative Example 1)

Glass particles were deposited in the same manner as in Example 1 except that not only an interval between each of outer burners at both ends and a burner adjacent thereto, but also an interval between any two of burners in an intermediate position were all set to 200 mm respectively (the method of traverse was selected to be the pattern shown in Fig. 5 and the shifting distance of the burners every traverse was equal). A glass particles deposit (porous glass preform) obtained thus had a total length of 1,700 mm, an outer diameter of 240 mm, a length of an effective portion of 1,000 mm, and a length of a tapered portion of 350 mm formed at each of the both ends. The length of the effective portion relate to the total length was 58.8%.

On the basis of comparison between Example 1 and Comparative Example 1, each tapered portion in Example 1 was smaller than that in Comparative Example 1, and the length of the effective portion in Example 1 was made longer by 200 mm than that in Comparative Example 1.

### (Example 2)

Glass particles were deposited in the same manner as in Example 1 except that an interval between each of two outer burners at both ends and a burner adjacent thereto was made 120 mm and raw material fed to each of the outer burners at the both ends was reduced by 30%. A glass particles deposit obtained thus had a total length of 1,540 mm, and a length of an effective portion of 1,100 mm. In addition, a length of a tapered portion formed at each of the both ends was 210 mm, and it is proved that glass particles were deposited in a state as good as that in Example 1 substantially without any difference.

### (Example 3)

Glass particles were deposited in the same manner as in Example 2 except that raw material fed to each of outer burners at both ends was not reduced by 30% but selected to be constant. A glass particles deposit obtained thus had a total length of 1,540 mm, and a length of an effective portion of 950 mm. In this case, the effective portion was reduced not because of increase in tapered portions but because of excessive overlapping so that the portions which has a large outer diameter were formed and it could not be the effective portion. The length of the effective portion relative to the total length was 61.7%, which was improved compared with Comparative Example 1.

On the basis of comparison between Example 2 and Example 3, when there was an excessive influence of overlapping between the portions where glass particles were deposited by the outer burners and the burners adjacent thereto, it is proved that an effective length can be increased by reducing a feed rate of raw material to the outer burners.

### Industrial Applicability

According to the present invention, a problem that tapered portions at both ends of a glass particles deposit are too large can be solved, so that a method of producing a glass particles deposit having a small noneffective portion with high efficiency of deposition, and an apparatus used for the method can be provided.

## Claims

1. A method of producing a glass particles deposit comprising the steps of:
arranging a plurality of glass particle synthesizing burners opposite to a rotating starting rod;
relatively reciprocally moving the starting rod and the glass particle synthesizing burners in parallel with each other;
performing an movement by shifting a turn-back position of the relative movement along a predetermined direction by approximate 1/n (n being an integer) of a burner interval each time, and by shifting the turn-back position in an reverse direction when the turn-back position has been shifted by a distance corresponding to the burner interval; and
repeating the movement sequentially so that glass particles synthesized by the burners are deposited on a surface of the starting rod to thereby produce the glass particles deposit,
**characterized in that** the glass particles are deposited under a condition that an interval between a burner located at any one of both ends in a direction of the relative movement and a burner located adjacent thereto is set to be shorter than another interval between any two of intermediate burners other than the two burners located at the both ends.

2. A method of producing a glass particles deposit according to Claim 1, wherein a length over which the turn-back position of the relative movement is shifted is in a range of from 5 mm to 60 mm.

3. A method of producing a glass particles deposit according to Claim 1 or 2, wherein a feed rate of glass raw material to the burner located at any one of the both ends is lower than a feed rate of glass raw material to each of the intermediate burners.

4. A method of producing a glass particles deposit according to Claim 1 or 2, wherein the interval between the burner located at any one of the both ends and the burner located adjacent thereto is set so that flames of the end burner and the adjacent burner do not interfere with each other.

5. A method of producing a glass particles deposit according to Claim 1 or 2, wherein the burners located at any one of the both ends is a burner having less flame spread than each of the intermediate burners.

6. An apparatus of producing a glass particles deposit in which a plurality of glass particle synthesizing burners are arranged opposite to a rotating starting rod so that the starting rod and the glass particle synthesizing burners are relatively reciprocally moved in parallel with each other; and glass particles synthesized by the burners are deposited on a surface of the starting rod to thereby produce a glass particles deposit,
**characterized in that** an interval between a burner located at any one of both ends in a direction of the relative movement and another burner located adjacent thereto is arranged to be shorter than another interval between any two of intermediate burners other than the two burners located at the both ends.

7. An apparatus of producing a glass particles deposit according to Claim 6, wherein the interval between the burner located at any one of the both ends and the burner located adjacent thereto is in a range that the interval is smaller than 1 time but not smaller than 0.2 time of the interval between any two of the intermediate burners.

8. An apparatus of producing a glass particles deposit according to Claim 6, wherein the interval between the burner located at any one of the both ends and the burner located adjacent thereto is set to be optionally adjustable in a range that the interval is smaller than 1 time but not smaller than 0.2 time of the interval between any two of the intermediate burners.

9. An apparatus of producing a glass particles deposit according to any one of Claims 6 to 8, wherein the burner located at any one of the both ends is a burner having less flame spread than each of the intermediate burners.
